# EUROPEAN PATENT APPLICATION

(11) **EP 3 539 379 A1**
(43) Date of publication of application: **18.09.2019**
(21) Application number: 18192696.5
(22) Date of filing: 05.09.2018
(51) Int. Cl.: A01M 29/18, A01M 1/04, A01M 1/22

(54) **PEST MANAGEMENT DEVICE**

(30) Priority: 13.03.2018 US 201862642119 P; 02.08.2018 US 201816053340
(71) Applicant: DaVinci II CSJ, LLC, Fairfield, NJ 07004 (US)
(72) Inventor: Khubani, Ajit, Fairfield, NJ 07004 (US); Hu, Bingo, Fairfield, NJ 07004 (US); Landolfo, Giuseppe, Fairfield, NJ 07004 (US)
(74) Representative: Engelbrecht, Christoph

(57) **Abstract**

A multi-functional pest management device including a housing, a light assembly disposed in the housing, the light assembly including a light source emitting a light having a wavelength that attracts at least one insect and an electrified coil in proximity to the light source, and a sound generation assembly disposed in the housing, the sound generation assembly including a speaker configured to emit a sound wave having a frequency known to deter at least one rodent.

## Description

### CROSS-REFERENCE TO PRIOR APPLICATIONS

This application claims priority to U.S. Provisional Application Serial No. 62/642,119, filed on March 13, 2018 and to US Application Serial No. 16/053,340, filed on August 2, 2018, which are hereby incorporated by reference herein in their entirety.

### SUMMARY

Embodiments of the present invention can provide a multi-functional pest management device including a housing, a light assembly disposed in the housing, the light assembly including a light source emitting a light having a wavelength that attracts at least one insect and an electrified coil in proximity to the light source, and a sound generation assembly disposed in the housing, the sound generation assembly including a speaker configured to emit a sound wave having a frequency known to deter at least one rodent.

According to certain embodiments, the multi-functional pest management device may further include a safety switch having a first position and a second position, the second position preventing operation of the light assembly.

According to certain embodiments, the multi-functional pest management device may further include a frame supporting the electrified coil, wherein the frame includes a plurality of ribs, each of the plurality of ribs having a plurality of recesses for receiving and securing the electrified coil.

According to certain embodiments, the light assembly may be rotatable relative to the sound generation assembly.

According to certain embodiments, the light source may emit a light having an ultraviolet wavelength, and the sound generation assembly may emit a sound having a frequency between 50 kHz and 240 kHz.

Another embodiment of the present invention can provide a multi-functional pest management device including a housing having an upper portion and a lower portion, a light assembly disposed in the upper portion, the light assembly including a light source and an electrified coil, a sound generation assembly disposed in the lower portion, the sound generation assembly including a speaker, and a connecting seat coupling the upper portion to the lower portion.

According to certain embodiments, the multi-functional pest management device may further include a safety switch having a first position and a second position, the second position preventing operation of the light assembly.

According to certain embodiments, the multi-functional pest management device may further include a frame supporting the electrified coil, wherein the frame includes a plurality of ribs, each of the plurality of ribs having a plurality of recesses for receiving and securing the electrified coil.

According to certain embodiments, the light source may be disposed within the frame and may emit a light having an ultraviolet wavelength. The sound generation assembly may emit a sound having a frequency between 50 kHz and 240 kHz.

According to certain embodiments, the light assembly may be rotatable relative to the sound generation assembly.

Another embodiment of the present invention can provide a multi-functional pest management device including a housing, a light assembly disposed in the housing, the light assembly including a light source emitting a light, a sound generation assembly disposed in the housing, the sound generation assembly including a speaker configured to emit a sound and a switch coupled to the light assembly and the sound generation assembly, where upon a first actuation of the switch, the light assembly is activated, upon a second actuation of the switch, the light assembly is deactivated and the sound generation assembly is activated, upon a third actuation of the switch, the light assembly and the sound generation assembly are both activated, and upon a fourth actuation of the switch, the light assembly and the sound generation assembly are both deactivated.

According to certain embodiments, the light source may emit a light having an ultraviolet wavelength and the sound generation assembly may emit a sound having a frequency between 50 kHz and 240 kHz.

According to certain embodiments, the light assembly may be rotatable relative to the sound generation assembly.

According to certain embodiments, the multi-functional pest management device may further include a frame supporting an electrified coil, wherein the frame includes a plurality of ribs, each of the plurality of ribs having a plurality of recesses for receiving and securing the electrified coil.

According to certain embodiments, the multi-functional pest management device may further include a safety switch having a first position and a second position, the second position preventing operation of the light assembly.

### BACKGROUND

Summer and autumn are typically the most rampant seasons for pests, such as insects, bugs and rodents, such as mosquitoes, rats, mice, etc. Such pests are nuisances and can carry and transmit disease, impacting people's lives and health on a daily basis. Traps, poisons, sprays, candles, and other devices are regularly used to kill, trap, or repel pests. Despite the wide array of devices, many devices may only employ a single technique to target a specific pest.

### BRIEF DESCRIPTION OF THE DRAWINGS

The features and advantages of the present invention can be more readily understood from the following detailed description with reference to the accompanying drawings, wherein:
Figure 1 is a diagram of an exemplary multi-functional pest management device according to one embodiment of the present invention;
Figure 2 is a diagram of an exemplary multi-functional pest management device according to one embodiment of the present invention;
Figure 3 is a diagram of an exemplary multi-functional pest management device according to one embodiment of the present invention;
Figure 4 is a cross-sectional view of an exemplary multi-functional pest management device according to one embodiment of the present invention; and
Figure 5 is a diagram of an exemplary safety switch according to one embodiment of the present invention.

### DETAILED DESCRIPTION

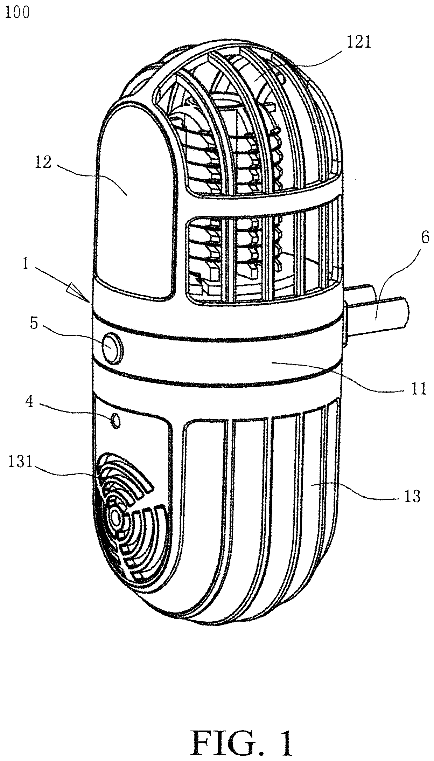

Exemplary embodiments of the present invention can provide a novel multi-functional pest management device. Exemplary multi-functional pest management device 100 is shown in FIGs. 1-5. Exemplary multi-functional pest management device 100 can facilitate repelling and deterring certain pests and rodents while also attracting and killing other pests. For example, the exemplary multi-functional pest management device 100 can repel and deter rodents such as mice and other rodents by producing sound waves (such as, e.g., ultrasound), while attracting and killing insects and bugs such as mosquitoes using a light source and an electrified coil.

Referring to FIGs. 1 to 5, exemplary multi-functional pest management device 100 can include electrical connector 6, connecting seat 11, light assembly 2 having coil 221, light source 23, and upper bracket 14, and sound generation assembly 3 having speaker 32, sound outlet 131, and lower bracket 15, all which can be disposed within housing 1. Electrical connector 6 can be inserted into an outlet or coupled to a power source to provide power to various elements of exemplary multi-functional pest management device 100. As shown in FIG. 1, electrical connector 6 may be coupled to housing 1 via connecting seat 11. According to certain exemplary embodiments, housing 1 can include upper portion 12 coupled to lower portion 13 via connecting seat 11. Housing 1 can include any shape, however, according to one embodiment of the present invention, housing 1 may include a substantially ovoid shape. Alternatively, housing 1 may include a substantially spherical shape, cone shape, cube shape, etc. According to certain exemplary embodiments, upper portion 12 may house light assembly 2 and lower portion 13 may house sound generation assembly 3. Alternatively, light assembly 2 can be housed within lower portion 13 and sound generation assembly 3 can be housed within upper portion 12. Light assembly 2 can be configured to attract and kill insects and bugs such as mosquitoes using a light source and an electrified coil while sound generation assembly 3 can be configured to repel and deter pests such as mice and other rodents by producing sound waves, such as ultrasound. In a preferred embodiment of the present invention, exemplary multi-functional pest management device 100 may be used without the use of any chemical substances.

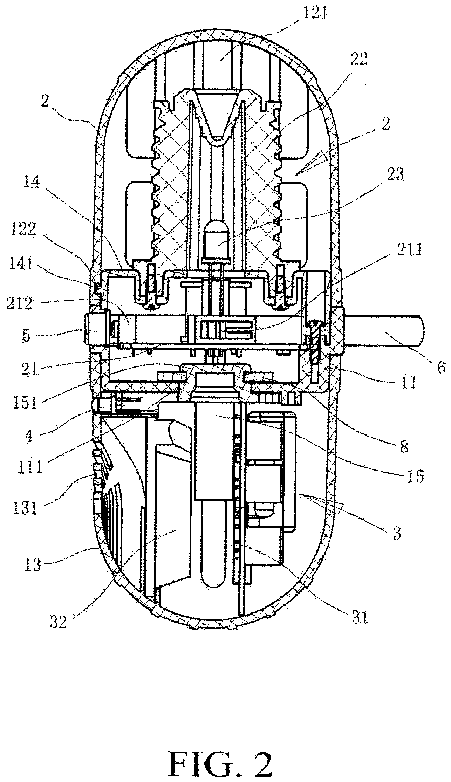

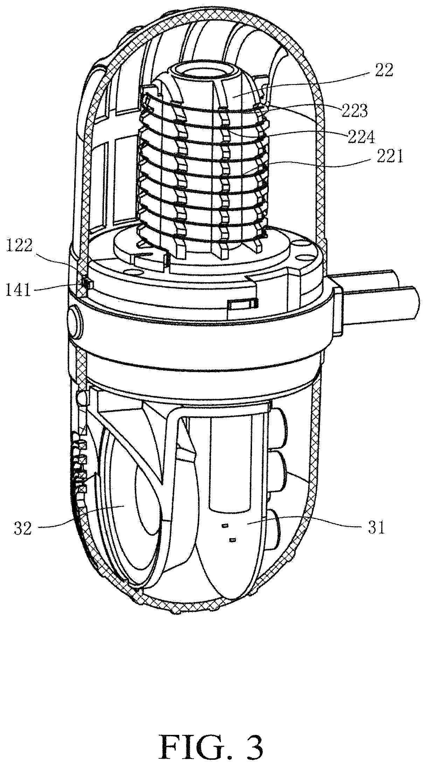

As shown in FIGs. 2 and 3, light assembly 2 may be disposed within upper portion 12 and may include frame 22, coil 221, light source 23 circuit board 21, and upper bracket 14. In one embodiment of the present invention, light source 23 may be disposed within frame 22 and may be coupled to circuit board 21. In a preferred embodiment of the present invention, light assembly 2 of exemplary multi-functional pest management device 100 may utilize mosquito phototaxis, the use of ultraviolet light to attract mosquitoes, to attract mosquitos and may further use a high-voltage metal network to kill mosquitoes, such as coil 221. Coil 221 may be configured to ensure maximum coverage to increase the probability of the attracted insects coming into contact with coil 221. In operation, light source 23 may produce a light to attract mosquitos and other insects, and coil 221 may be electrified, so that the mosquitos or other insects attracted by the light may contact coil 221 and may be killed. Although FIG. 2 shows light source 23 being a light emitting diode (LED), light source 23 may be any type of lighting element, such as a light bulb, a laser, a chip-on-board (COB) LED, or any other type of element capable of emitting light. Preferably, light source 23 emits a light that attracts mosquitos and other insects, such as an ultraviolet (UV) light. Light source 23 may emit a light at a wavelength between 315 nm to 380 nm to attract insects to coil 221. For example, light source 23 may emit a light at a wavelength of 365 nm to attract insects such as houseflies, wasps, and mosquitoes. Optionally, light assembly 2 can include other features configured to attract mosquitos and insects, such as a heat source, a scented element, etc.

According to certain exemplary embodiments, frame 22 can support coil 221 in a winding/spiral arrangement, and coil 221 can be electrified via an electrical coupling to circuit board 21, which receives power from a power source via electrical connector 6. In one embodiment of the present invention, coil 221 may include one or more conducting wires. For example, coil 221 may include two, three, four, or any number of conducting wires desired. Frame 22 may be transparent or semi-transparent to allow the light generated by light source 23 to be visible outside of frame 22. Further, frame 22 may act as a light dispersing element to disperse the light generated by light source 23. Frame 22 may include ribs 223 with recesses 224 that enable coil 221 to be wound in a spiral arrangement around frame 22. For example, as shown in FIG. 3, recesses 223 of ribs 223 may receive coil 221, which may be wound around frame 22. In one embodiment of the present invention, frame 22 may be coupled to upper bracket 14, which in turn may be coupled to connecting seat 11. According to one embodiment of the present invention, upper bracket 14 may be coupled to connecting seat 11 via screws. However, upper bracket 14 may be coupled to connecting seat 11 by adhesives, fasteners, magnets, or any other method of coupling upper bracket 14 to connecting seat 11.

In one embodiment of the present invention, upper bracket 14 may include protrusions 141 and upper portion 12 may include grooves 122. Upper portion 12 may be removably coupled to upper bracket 14 via protrusions 141 which may be inserted into grooves 122 of upper portion 12. In a preferred embodiment of the present invention, upper portion 12 may be placed on top of upper bracket 14 and rotated. Rotation of upper portion 12 on upper bracket 14 may allow protrusions 141 of upper bracket 14 to be inserted into grooves 122, securing upper portion 12 to upper bracket 14. However, upper portion 12 may be secured to upper bracket 14 by other means, such as adhesives, magnets, screws, fasteners, or any other desired method. Upper portion 12 being removably coupled to upper bracket 14 allows for the removal of upper portion 12 to access light assembly 2 and may allow for removal of any debris present in upper portion 12.

In one embodiment of the present invention, upper portion 12 of housing 1 may include holes 121. Holes 121 may allow mosquitos and other insects to enter upper portion 12 to contact coil 221 of light assembly. Further, holes 121 may allow light generated by light source 23 of light assembly 2 to exit upper portion 12 in order to attract insects, such as mosquitos, to light assembly 2. Although FIG. 1 shows holes 121 being arranged in a parallel manner, holes 121 may be arranged in any manner on upper portion 12 such as a cross-stitched pattern.

As shown in FIGs. 2 and 3, exemplary multi-functional pest management device 100 may also include sound generation assembly 3. According to certain exemplary embodiments, sound generation assembly 3 may be disposed in lower portion 13 and may include lower bracket 15, lower circuit board 31, power indicator 4, sound outlet 131, and speaker 32, which allow sound generation assembly 3 to repel certain rodents and insects. According to one embodiment of the present invention, power indicator 4 may include a light source, such as an LED to indicate that power is being provided to sound generation assembly 3. Once powered, sound generation assembly 3 can emit sounds, smells, light, vibrations, etc. to which pests may have an aversion. For example, speaker 32 may be electrically coupled to lower circuit board 31, and can be disposed adjacent to sound outlet 131 to output the desired sounds that deter pests. Speaker 32 is preferably configured to emit sounds designed to repel certain types of pests. Further, circuit board 21 may be coupled to lower circuit board 31 lower circuit board 31 can be configured to produce any sound that may act as a repellent for pests, which may be outputted via speaker 32. For example, sound generation assembly 3 may use sounds waves to drive out rats and other rodents, and pests. The sound waves may propagate from speaker 32 through sound outlet 131 to stimulate the auditory and nervous system of rodents and pests, causing physical disorientation and discomfort. The physical disorientation and discomfort achieved by the sound waves may drive out the rodents and pests. The sound waves can be a constant high frequency sound that is above the audible frequency range for human hearing so as not to be a nuisance to humans. For example, ultrasonic sounds waves may be used to deter dogs, or high frequency sounds ranging from 50 kHz to 100kHz may be sued to deter insects. In certain instances, higher frequency sounds as high as 240 kHz may be used to deter rodents such as bats. Further, the sounds can be imitations of various predatory animals to deter prey and smaller animals. In one embodiment of the present invention, speaker 32 may output sound in a cyclic manner. For example, speaker 32 may output sound for 10 seconds for a cycle output of 20kHz to 40kHz. However, speaker 32 may output sound for any length of time and at any frequency.

As shown in FIG. 2, sound generation assembly 3 may be coupled to connecting seat 11 via lower bracket 15. Lower bracket 15 may be coupled to lower circuit board 31 and speaker 32. According to one embodiment of the present invention, lower bracket 15 of sound generation assembly 3 may include circular projection 151 and connecting seat 11 may include connecting hole 111 which may be located at the center of connecting seat 11. Circular projection 151 may be inserted into connecting hole 111 of connecting seat 11 and retainer 8 may be coupled to circular projection 151 to secure lower bracket 15 to connecting seat 11. Retainer 8 securing lower bracket 15 of sound generation assembly 3 to connecting seat 11 may allow for rotation of sound generation assembly 3 relative to connecting seat 11. Lower bracket 15 may be coupled to connecting seat 11 in any other manner that for rotation of sound generation assembly 3 relative to connecting seat 11, such as magnets, threaded socket, etc. Rotation of sound generation assembly 3 may allow for obtaining the optimal angle of sound emission produced by speaker 32 through sound outlet 131.

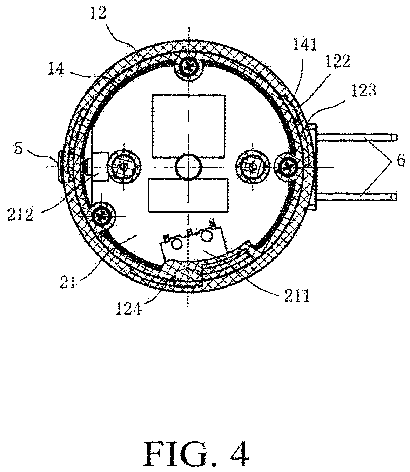

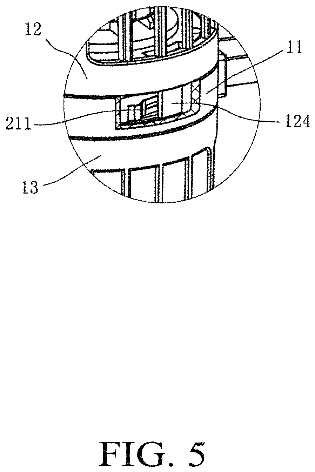

According to certain embodiments of the present invention, connecting seat 11 may include circuit board 21, button 5, and plug adapter 6. As shown in FIG. 2, circuit board 21 may be disposed within connecting seat 21 and electrical connector 6 may be coupled to connecting seat 21 to provide power to circuit board 21 via lower circuit board 31. However, circuit board 21 may receive power by other means. For example, circuit board 21 may receive power via a battery, solar panels, charging device, or any other means of providing power to circuit board 21. Although FIG. 2 shows lower circuit board 31 and circuit board 21 being separate components, lower circuit board 31 and circuit board 21 may be integrated into a single circuit board. Further, button 5 may be disposed on connecting seat 11 and may be coupled to switch 212 of circuit board 21. As further shown in FIGs. 2 and 4, circuit board 21 may include switch 212 and safety switch 211. Actuation of button 5 results in actuation of switch 212 causing activation of exemplary multi-functional pest management device 100. According to one embodiment of the present invention, safety switch 211 may be coupled to circuit board 21 and may act as a safety switch for light assembly 2. As shown in Fig. 5, projection 124 of upper portion 12 may contact safety switch 211 when upper portion 12 is coupled to upper bracket 14 of light assembly 2. For example, safety switch 211 may be disengaged when upper portion 12 is rotationally coupled to upper bracket 14. When upper portion 12 is rotated, projection 124 may activate safety switch 211, disengaging safety switch 211. Safety switch 211 being disengaged allows circuit board 21 to receive power, thus providing electrical current to coil 221 and light source 23 of light assembly 2. However, when upper portion 12 is not coupled to upper bracket 14, projection 124 does not activate safety switch 211, therefore safety switch 211 is engaged, preventing circuit board 21 from receiving power. When circuit board 21 does not receive power, no electrical current can flow from circuit board 21 to coil 221 and light source 23 of light assembly 2.

According to one embodiment of the present invention, sound generation assembly 3 and light assembly 2 of exemplary multi-functional pest management device 100 may be turned on at the same time or each of sound generation assembly 3 or light assembly 2 may be turned on independently with the other turned off. For example, sound generation assembly 3 may be turned on with light assembly 2 turned off or sound generation assembly 3 may be turned off with light assembly 2 turned on. In practice, upon actuation of switch 212 for a first time, light source 23 and coil 221 of light assembly 2 enter a working state in which they are supplied with power via circuit board 21. Upon actuation of switch 212 for a second time, light source 23 and coil 221 of light assembly 2 may be turned off, and power indicator 4 and speaker 32 of sound generation assembly 3 may enter a working state. Upon actuation of switch 212 for a third time, light source 23 and coil 221 of light assembly 2, and speaker 32 of sound generation assembly 3 may enter a working state at the same time. Upon actuation of switch 212 for a fourth time, exemplary multi-functional pest management device 100 powers off.

In one embodiment of the present invention, exemplary multi-functional pest management device 100 may be configured to be used outdoors. Exemplary multi-functional pest management device 100 being configured for outdoor use can facilitate the repellent of insects and rodents in an outdoor setting. Housing 1 may be substantially weather-proofed to enable exemplary multi-functional pest management device 100 to withstand the elements for outdoor use. For example, housing 1 of exemplary multi-functional pest management device 100 can include seals and weather proofed elements to prevent moisture, wind, dirt, dust, rain, snow, etc. from entering housing 1. Additional weather-proofing elements may be incorporated along buttons, seams and joints that may be more susceptible to infiltration of weather.

In yet another embodiment of the present invention, exemplary multi-functional pest management device 100 may include a timer. The timer may turn exemplary multi-functional pest management device 100 ON or OFF based on the time of day or based on certain durations of operation. For example, the timer can operate exemplary multi-functional pest management device 100 at defined times during the evening/night (e.g., 7-9PM, 8-10PM, etc.). Alternatively, the timer can allow exemplary multi-functional pest management device 100 to operate for a specific duration and turn off after the duration has expired. For example, the timer can allow exemplary multi-functional pest management device 100 to be on for an hour, two hours, 30 minutes, etc. and automatically turn off after the selected duration.

In yet another embodiment of the present invention, exemplary multi-functional pest management device 100 may include a light sensor. Exemplary multi-functional pest management device 100 including a light sensor may allow exemplary multi-functional pest management device 100 to automatically activate at night, when mosquitos are most prevalent. Exemplary multi-functional pest management device 100 may shut off when light sensor detects a predetermined amount of light, such as during the day.

Exemplary multi-functional pest management device 100 can also include a wireless remote control to enable wireless operation of exemplary multi-functional pest management device 100. For example, exemplary multi-functional pest management device 100 can include a wireless transmitter/receiver that can allow wireless communication with a wireless device. For example, the wireless transmitter/receiver can employ radio frequency ("RF"), Bluetooth, and/or Wi-Fi technology to facilitate wireless communication between projector 101 and the remote control. According to certain embodiments, exemplary multi-functional pest management device 100 can be wirelessly operated via remote control. For example, the remote control can control powering exemplary multi-functional pest management device 100 ON and/or OFF, controlling activation of light assembly 2 and sound generation assembly 3, setting a timer, etc. Further the remote control can indicate and display the current operating status of exemplary multi-functional pest management device 100 (e.g., whether or not the exemplary multi-functional pest management device 100 is ON or OFF and/or whether or not one of light assembly 2 and/or sound generation assembly 3 is ON or OFF). According to certain embodiments, the remote control can be implemented via an app on a mobile device such as a smartphone or tablet, or via a web-based application on a computer.

The embodiments and examples shown above are illustrative, and many variations can be introduced to them without departing from the spirit of the disclosure. For example, elements and/or features of different illustrative and exemplary embodiments herein may be combined with each other and/or substituted with each other within the scope of the disclosure. For a better understanding of the disclosure, reference should be had to any accompanying drawings and descriptive matter in which there is illustrated exemplary embodiments of the present invention.

### Aspects of the invention as described in the following clauses:

1. A multi-functional pest management device comprising:
   a housing;
   a light assembly disposed in the housing, the light assembly including a light source emitting a light having a wavelength that attracts at least one insect and an electrified coil in proximity to the light source; and
   a sound generation assembly disposed in the housing, the sound generation assembly including a speaker configured to emit a sound wave having a frequency known to deter at least one rodent.
2. The multi-functional pest management device of clause 1, further comprising a safety switch having a first position and a second position, the second position preventing operation of the light assembly.
3. The multi-functional pest management device of any one of the preceding clauses, further comprising a frame supporting the electrified coil, wherein the frame includes a plurality of ribs, each of the plurality of ribs having a plurality of recesses for receiving and securing the electrified coil.
4. The multi-functional pest management device of clause 3, wherein the light source is disposed within the frame.
5. The multi-functional pest management device of any one of the preceding clauses, wherein the light assembly is rotatable relative to the sound generation assembly.
6. The multi-functional pest management device of any one of the preceding clauses, wherein the light source emits a light having an ultraviolet wavelength.
7. The multi-functional pest management device of any one of the preceding clauses, wherein the sound generation assembly emits a sound having a frequency between 50 kHz and 240 kHz.
8. A multi-functional pest management device comprising:
   a housing having an upper portion and a lower portion;
   a light assembly disposed in the upper portion, the light assembly including a light source and an electrified coil;
   a sound generation assembly disposed in the lower portion, the sound generation assembly including a speaker; and
   a connecting seat coupling the upper portion to the lower portion.
9. The multi-functional pest management device of clause 8, further comprising a safety switch having a first position and a second position, the second position preventing operation of the light assembly.
10. The multi-functional pest management device of any one of the clauses 8 to 9, further comprising a frame supporting the electrified coil, wherein the frame includes a plurality of ribs, each of the plurality of ribs having a plurality of recesses for receiving and securing the electrified coil.
11. The multi-functional pest management device of clause 10, wherein the light source is disposed within the frame.
12. The multi-functional pest management device of any one of the clauses 8 to 11, wherein the light source emits a light having an ultraviolet wavelength.
13. The multi-functional pest management device of any one of the clauses 8 to 12, wherein the sound generation assembly emits a sound having a frequency between 50 kHz and 240 kHz.
14. The multi-functional pest management device of any one of the clauses 8 to 13, wherein the light assembly is rotatable relative to the sound generation assembly.
15. A multi-functional pest management device comprising:
   a housing;
   a light assembly disposed in the housing, the light assembly including a light source emitting a light;
   a sound generation assembly disposed in the housing, the sound generation assembly including a speaker configured to emit a sound; and
   a switch coupled to the light assembly and the sound generation assembly, where upon a first actuation of the switch, the light assembly is activated, upon a second actuation of the switch, the light assembly is deactivated and the sound generation assembly is activated, upon a third actuation of the switch, the light assembly and the sound generation assembly are both activated, and upon a fourth actuation of the switch, the light assembly and the sound generation assembly are both deactivated.
16. The multi-functional pest management device of clause 15, wherein the sound generation assembly emits a sound having a frequency between 50 kHz and 240 kHz.
17. The multi-functional pest management device of any one of the clauses 15 to 16, wherein the light assembly is rotatable relative to the sound generation assembly.
18. The multi-functional pest management device of any one of the clauses 15 to 17, wherein the light source emits a light having an ultraviolet wavelength.
19. The multi-functional pest management device of any one of the clauses 15 to 18, further comprising a frame supporting an electrified coil, wherein the frame includes a plurality of ribs, each of the plurality of ribs having a plurality of recesses for receiving and securing the electrified coil.
20. The multi-functional pest management device of any one of the clauses 15 to 19, further comprising a safety switch having a first position and a second position, the second position preventing operation of the light assembly.

## Claims

1. A multi-functional pest management device comprising:
a housing;
a light assembly disposed in the housing, the light assembly including a light source emitting a light having a wavelength that attracts at least one insect and an electrified coil in proximity to the light source; and
a sound generation assembly disposed in the housing, the sound generation assembly including a speaker configured to emit a sound wave having a frequency known to deter at least one rodent.

2. The multi-functional pest management device of claim 1, further comprising a safety switch having a first position and a second position, the second position preventing operation of the light assembly.

3. The multi-functional pest management device of any one of the preceding claims, further comprising a frame supporting the electrified coil, wherein the frame includes a plurality of ribs, each of the plurality of ribs having a plurality of recesses for receiving and securing the electrified coil.

4. The multi-functional pest management device of claim 3, wherein the light source is disposed within the frame.

5. The multi-functional pest management device of any one of the claims 3 or 4 wherein the frame is configured to act as a light dispersing element to disperse the light generated by light source.

6. The multi-functional pest management device of any one of the preceding claims, wherein the light assembly is rotatable relative to the sound generation assembly.

7. The multi-functional pest management device of any one of the preceding claims, wherein the light source emits a light having an ultraviolet wavelength.

8. The multi-functional pest management device of any one of the preceding claims, wherein the sound generation assembly emits a sound having a frequency between 50 kHz and 240 kHz.

9. The multi-functional pest management device of any one of the preceding claims, wherein the housing has an upper portion and a lower portion;
wherein the light assembly is disposed in the upper portion,
wherein the sound generation assembly is disposed in the lower portion; and
wherein the multi-functional pest management device further comprises a connecting seat for coupling the upper portion to the lower portion.

10. The multi-functional pest management device of any one of the preceding claims, further comprising a switch coupled to the light assembly and the sound generation assembly, wherein upon a first actuation of the switch, the light assembly is activated, upon a second actuation of the switch, the light assembly is deactivated and the sound generation assembly is activated, upon a third actuation of the switch, the light assembly and the sound generation assembly are both activated, and upon a fourth actuation of the switch, the light assembly and the sound generation assembly are both deactivated.

11. The multi-functional pest management device of any one of the preceding claims, wherein the light assembly includes a heat source or a scented element configured to attract the at least one insect.

12. The multi-functional pest management device of any one of the preceding claims further comprising a timer for turning the multi-functional pest management device on or off based on the time of day or based on a predefined duration of operation.

13. The multi-functional pest management device of any one of the preceding claims further comprising a light-sensor for activating or shutting off the multi-functional pest management device based on a detected amount of light.

14. The multi-functional pest management device of any one of the preceding claims further comprising a wireless transmitter/receiver for allowing wireless communication with a wireless device, in particular a remote control, and in particular wherein the wireless transmitter/receiver employs an RF, Bluetooth, or Wi-Fi technology.

15. The multi-functional pest management device of any one of the preceding claims configured to be used without the use of any chemical substances.
